# EUROPÄISCHE PATENTANMELDUNG

(11) **EP 1 416 217 A2**
(43) Veröffentlichungstag der Anmeldung: **06.05.2004**
(21) Anmeldenummer: 03016281.2
(22) Anmeldetag: 18.07.2003
(51) Int. Cl.: F16M 11/42

(54) **Fahrbare Werkstückauflage**

(30) Priorität: 02.11.2002 DE 20216855 U
(71) Anmelder: WEHA- LUDWIG WERWEIN GMBH, D-86343 Königsbrunn (DE)
(72) Erfinder: Aigner, Kurt, 86343 Königsbrunn (DE)
(74) Vertreter: Schwarz, Thomas, Dipl.-Ing.

(57) **Zusammenfassung**

Die Erfindung betrifft eine fahrbare Werkstückauflage, insbesondere zur Durchführung von Bildhauer- und Steinmetzarbeiten, die ein Fahrgestell (1) mit mehreren von einer Mittelachse (2) beabstandeten Laufrollen (3, 4) und eine an dem Fahrgestell (1) höhenverstellbar angeordnete Ablageplatte (10) enthält. Um eine Werkstückauflage mit hoher Kippstabilität und erweitertem Einsatzbereich zu schaffen ist der Abstand mindestens einer der Laufrollen (3, 4) zur Mittelachse (2) veränderbar.

## Beschreibung

Die Erfindung betrifft eine fahrbare Werkstückauflage, insbesondere für Bildhauer- und Steinmetzarbeiten, nach dem Oberbegriff des Anspruchs 1.

Derartige Werkstückauflagen werden vielfach von Bildhauern oder Steinmetzen zur Auflage der zu bearbeitenden Werkstücke verwendet. Sie weisen üblicherweise ein Fahrgestell mit mehreren Laufrollen und eine an dem Fahrgestell höhenverstellbar angeordnete Auflageplatte auf. Damit können die zu bearbeitenden Gegenstände auf eine für den Bearbeiter optimale Arbeitshöhe gebracht und einfach gedreht werden. Auch zur Verschiebung der Werkstücke über kürzere Strecken sind derartige Werkstückauflagen geeignet.

Aus der DE 201 00 358 U1 ist eine gattungsgemäße Werkstückauflage bekannt. Das Fahrgestell des dort beschriebenen Drehtisches besteht aus einem im Grundriß trapezförmigen Tragrahmen, der vier in den Ecken angeordnete und durch Querstreben miteinander verbundene Lagerplatten enthält. An den Lagerplatten sind zwei nicht verschwenkbare Bockrollen und zwei um eine Vertikalachse schwenkbare Lenkrollen derart montiert, daß der Abstand des Mittelpunktes der Aufstandsfläche jeder Lenkrolle von der vertikalen Schwerachse des Drehtisches in jeder Schwenkstellung der Lenkrollen gleich oder größer ist als der Abstand des Mittelpunktes der Aufstandsfläche jeder Bockrolle von der Schwerachse. Dieser Drehtisch weist fest vorgegebene Abmessungen auf und ist besonders für schlanke und nicht zu weit seitlich vorstehende Werkstücke bestimmt. Bei Werkstücken mit größeren seitlichen Abmessungen, wie z.B. Platten oder Grabsteinen, können jedoch die Grenzen der Kippstabilität schnell überschritten werden.

In der DE 90 17 896 U1 ist ein Gerätewagen mit einem Bodenteil offenbart, welches von wenigstens drei in einem Abstand voneinander jeweils im Randbereich des Bodenteils vorgesehenen Rädern so getragen wird, dass der geometrische Mittelpunkt des von den Stellen, an denen die Räder vorgesehen sind, gebildeten Vieleckes auf dem Bodenteil liegt, wobei auf dem Bodenteil an einer gegen den Mittelpunkt versetzten Stelle eine sich im wesentlichen vertikal erstreckende Säule zum Aufnehmen von Geräten vorgesehen ist. Auch bei diesem bekannten Gerätewagen ist der Abstand der Räder von der Mittelachse des Bodenteils durch die Tragkonstruktion festgelegt und nicht durch Verstellung veränderbar.

Aus der US 4,793,266 A ist ein Hubwagen bekannt, der vier an einem Untergestell angeordnete Laufrollen enthält. Die Laufrollen insgesamt, d. h. Rad und Radhalterung, sind jedoch auch bei diesem bekannten Hubwagen mit einem festen Abstand von der Mittelachse des Untergestells angeordnet.

Aufgabe der Erfindung ist es, eine fahrbare Werkstückauflage der eingangs genannten Art zu schaffen, die einen erweiterten Einsatzbereich und eine hohe Kippstabilität aufweist.

Diese Aufgabe wird durch eine fahrbare Werkstückauflage mit den Merkmalen des Anspruchs 1 gelöst. Zweckmäßige Ausgestaltungen und vorteilhafte Weiterbildungen der Erfindung sind Gegenstand der Unteransprüche.

Ein wesentlicher Vorteil der erfindungsgemäßen Werkstückauflage besteht darin, daß sie relativ einfach und schnell an unterschiedliche Bedürfnisse angepaßt werden kann. Zur Aufnahme kleiner und schlanker Werkstücke können die Stützarme eingefahren und damit ein guter Zugang zu dem Werkstück ermöglicht werden. Bei größeren Gegenständen kann der Abstand von einer oder mehreren Laufrollen zur Mittelachse der Werkstückauflage dagegen vergrößert und damit die Kippstabilität erhöht werden.

In einer besonders zweckmäßigen Ausführungsform der Erfindung enthält das Fahrgestell fünf von der Mittelachse radial beabstandete Laufrollen. Dadurch wird eine besonders hohe Kippstabilität erreicht. Außerdem wird die Last auf mehrere Laufrollen verteilt, so daß mit den üblicherweise verwendeten Laufrollen auch eine größere Tragkraft ermöglicht wird. Es müssen daher auch keine speziellen Laufrollen vorgesehen werden, wodurch eine deutliche Reduzierung der Herstellungskosten ermöglicht wird. Zur besseren Lenkbarkeit sind zwei der Laufrollen als Bockrollen und drei als Lenkrollen ausgebildet.

Die Laufrollen sind zweckmäßigerweise an radial verstellbaren Stützarmen angeordnet, die in horizontalen Stützen verschiebbar geführt sind. Die Führungsstützen sind in einer besonders kippstabilen Ausführung an der Außenseite einer zentralen Gewindebuchse gleichwinklig beabstandet angeordnet. Die Ablageplatte ist am oberen Ende einer in der Gewindebuchse angeordneten Gewindespindel befestigt

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Werkstückauflage in einer Seitenansicht und
- **Figur 2**: eine Schnittansicht entlang der Linie I-I von Figur 1.

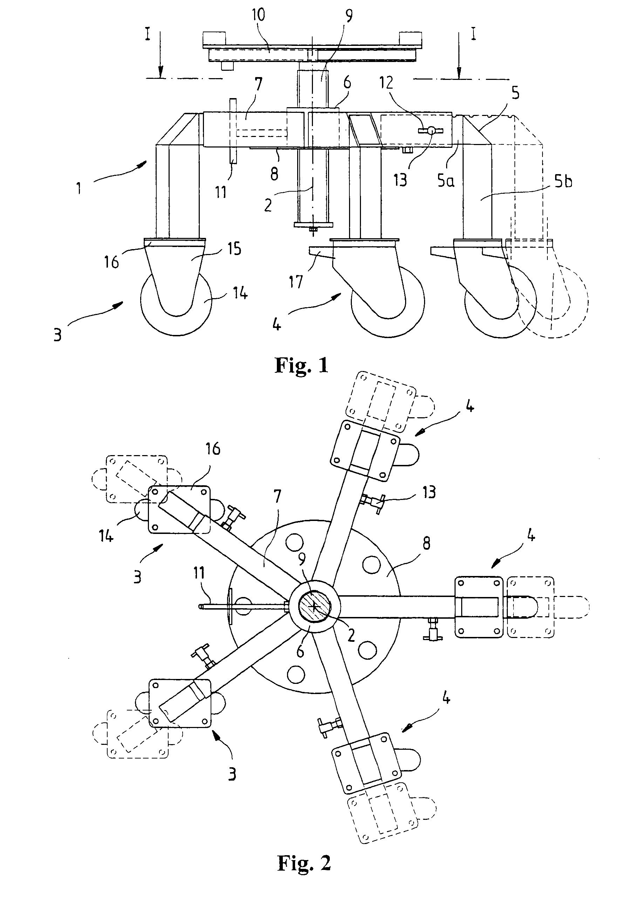

Die in den Figuren 1 und 2 gezeigte fahrbare Werkstückauflage zur Aufnahme und zum Transport eines zu bearbeitenden Werkstücks enthält ein Fahrgestell 1 mit fünf von einer vertikalen Mittelachse 2 radial beabstandeten Laufrollen, von denen zwei als sogenannte Bockrollen 3 und drei als Lenkrollen 4 ausgebildet sind. Die Laufrollen 3 und 4 sind an radial verstellbaren Stützarmen 5 angeordnet. Das Fahrgestell 1 enthält eine zentrale Gewindebuchse 6, an deren Außenumfang fünf radial vorstehende Führungsstützen 7 zur Aufnahme der radial verstellbaren Stützarme 5 befestigt sind. Die bei der gezeigten Ausführung horizontalen Führungsstützen 7 sind in Umfangsrichtung gleichwinklig beabstandet und werden über eine an der Unterseite der Gewindebuchse 6 befestigte Halteplatte 8 zusätzlich fixiert. Die Stützarme 5 sind bei dem dargestellten Ausführungsbeispiel L-förmig ausgebildet und weisen einen in den Führungsstützen 7 verschiebbar geführten horizontalen Führungsteil 5a und einen dazu rechtwinkligen vertikalen Stützteil 5b auf, an dem jeweils eine der Laufrollen 3 bzw. 4 befestigt ist.

Wie aus Figur 1 hervorgeht, ist in der Gewindebuchse 6 eine entsprechende Gewindespindel 9 angeordnet, an deren oberen Ende eine Tragplatte 10 verdrehfest fixiert ist. Durch Drehung der Tragplatte 10 kann so auf einfache Weise deren Höhe eingestellt und an die jeweiligen Bedürfnisse angepaßt werden. Das Gewinde der Gewindebuchse 6 und der Gewindespindel 9 ist zweckmäßigerweise als Trapezgewinde ausgeführt. An der Gewindebuchse 6 ist außerdem ein Klemmhebel 11 oder eine andere geeignete Klemmeinrichtung vorgesehen, durch welche die Gewindespindel 9 innerhalb der Gewindebuchse 6 geklemmt und damit die Tragplatte 10 gegenüber dem Fahrgestell 1 fixiert werden kann.

Auch an den Führungsstützen 7 ist jeweils eine Klemmanordnung vorgesehen, durch welche die Stützarme 5 innerhalb der Führungsstützen 7 in einer gewünschten Ausfahrstellung fixiert werden können. Bei der gezeigten Ausführung besteht die Klemmanordnung aus einem Längsschlitz 12 und einer Klemmschraube 13, durch welche der Stützarm 5 innerhalb der Führungsstütze 7 geklemmt werden kann. Durch entsprechende Wahl der Länge des Längsschlitzes 12 kann der Verstellbereich für den Stützarm 5 festgelegt und ein unerlaubtes Herausziehen verhindert werden.

Die Stützarme 5 und die dazugehörigen Führungsstützen 7 sind zweckmäßigerweise aus Hohlprofilen hergestellt. Die Laufrollen 3 und 4 enthalten ein Laufrad 14, das über ein bügelartiges Lagerteil 15 an der Unterseite einer an dem jeweiligen Stützarm 5 befestigten Platte 16 drehbar montiert ist. Bei den Lenkrollen 4 ist das bügelartige Lagerteil 15 um eine Vertikalachse drehbar an der Platte 16 angeordnet. An einer oder mehreren der Lenkrollen 4 kann außerdem auch eine Bremse 17 zu Verhinderung eines ungewollten Wegrollens vorgesehen sein.

## Patentansprüche

1. Fahrbare Werkstückauflage, insbesondere zur Durchführung von Bildhauer- und Steinmetzarbeiten, die ein Fahrgestell (1) mit mehreren von einer Mittelachse (2) beabstandeten Laufrollen (3, 4) und eine an dem Fahrgestell (1) höhenverstellbar angeordnete Ablageplatte (10) enthält, **dadurch gekennzeichnet, daß** der Abstand mindestens einer der Laufrollen (3, 4) zur Mittelachse (2) veränderbar ist.

2. Fahrbare Werkstückauflage nach Anspruch 1, **dadurch gekennzeichnet, daß** der Abstand sämtlicher Laufrollen (3, 4) von der Mittelachse (2) veränderbar ist.

3. Fahrbare Werkstückauflage nach Anspruch 1 oder 2, **dadurch gekennzeichnet, daß** das Fahrgestell (1) fünf von der Mittelachse (2) radial beabstandete Laufrollen (3, 4) enthält.

4. Fahrbare Werkstückauflage nach einem der Ansprüche 1 bis 3, **dadurch gekennzeichnet, daß** die Laufrollen (3, 4) an radial verstellbaren Stützarmen (5) angeordnet sind.

5. Fahrbare Werkstückauflage nach Anspruch 4, **dadurch gekennzeichnet, daß** die Stützarme (5) in horizontalen Führungsstützen (7) verschiebbar geführt sind.

6. Fahrbare Werkstückauflage nach Anspruch 5, **dadurch gekennzeichnet, daß** die Führungsstützen (7) an dem Außenseite einer zentralen Gewindebuchse (6) angeordnet sind.

7. Fahrbare Werkstückauflage nach Anspruch 5 oder 6, **dadurch gekennzeichnet, daß** die Führungsstützen (7) in Umfangsrichtung gleichwinklig beabstandet sind.

8. Fahrbare Werkstückauflage nach 6 oder 7, **dadurch gekennzeichnet, daß** die Ablageplatte (10) am oberen Ende einer in der Gewindebuchse (6) angeordneten Gewindespindel (9) befestigt ist.

9. Fahrbare Werkstückauflage nach einem der Ansprüche 4 bis 8, **dadurch gekennzeichnet, daß** die Stützarme (5) einen in den Führungsstützen (7) verschiebbar geführten Führungsteil (5a) und einen dazu rechtwinkligen Stützteil (5b) aufweisen.

10. Fahrbare Werkstückauflage nach einem der Ansprüche 5 bis 9, **dadurch gekennzeichnet, daß** an den Führungsstützen (7) eine Klemmanordnung (12, 13) zu Fixierung der Stützarme (5) angeordnet ist.

11. Fahrbare Werkstückauflage nach einem der Ansprüche 3 bis 10, **dadurch gekennzeichnet, daß** zwei der Laufrollen (3, 4) als Bockrollen (3) und drei als Lenkrollen (4) ausgebildet sind.
